Europäisches Patentamt

(19) European Patent Office

Office européen des brevets

(11) Numéro de publication : **0 205 799
B1**

(12) **FASCICULE DE BREVET EUROPÉEN**

(45) Date de publication du fascicule du brevet :
15.03.89

(21) Numéro de dépôt : **86105306.4**

(22) Date de dépôt : **17.04.86**

(51) Int. Cl.⁴ : **F 16 L 55/04**

(54) Dispositif compensateur des fluctuations de pression et de débit d'un liquide dans un réseau de circulation.

(30) Priorité : **09.05.85 CH 1965/85**

(43) Date de publication de la demande :
**30.12.86 Bulletin 86/52**

(45) Mention de la délivrance du brevet :
**15.03.89 Bulletin 89/11**

(84) Etats contractants désignés :
**CH DE FR LI NL SE**

(56) Documents cités :
**FR--A-- 429 749
FR--A-- 2 365 745
FR--E-- 67 285
US--A-- 3 447 557**

(73) Titulaire : **SOCIETE DES PRODUITS NESTLE S.A.
Case postale 353
CH-1800 Vevey (CH)**

(72) Inventeur : **Löliger, Willi
Buchwaldstrasse 6
Ch-3510 Konolfingen (CH)**

## Description

L'invention concerne un dispositif compensateur des fluctuations de pression et de débit d'un liquide dans un réseau de circulation dudit liquide, notamment dans un réseau stérilisable comprenant une pompe à pistons.

Les pompes à pistons ont l'inconvénient de produire des variations de débit. De telles variations de débit engendrent, notamment à pression élevée, de fortes pulsations dans les tuyaux d'aspiration et de refoulement au voisinage des pompes. De tels phénomènes endommagent les systèmes de contrôle et de commande, par exemple de la température et de la pression et peuvent même provoquer à la longue la rupture des conduites.

Dans le cas de l'homogénéisation à haute pression, l'écartement des soupapes de l'homogénéisateur devrait être asservi au débit pour qu'on obtienne les conditions optimales et constantes de pression et d'écoulement dans les interstices d'homogénéisation, ce qui n'est pas réalisable en pratique avec une pompe à pistons. C'est dire que le régime pulsatoire du débit est ici particulièrement inapproprié.

On sait compenser les fluctuations de pression produites par les pompes à pistons et en particulier celles travaillant à haute pression, par exemple les homogénéisateurs, au moyen de dispositifs amortisseurs du type à vase d'expansion ou à dilatation.

Lorsque ces pompes sont montées dans des réseaux de circulation travaillant sous conditions stériles, il faut veiller à ce que les dispositifs amortisseurs ne puissent pas constituer des foyers d'infection. Cela veut dire qu'ils doivent pouvoir être nettoyés facilement et être parfaitement stérilisés, de préférence sans démontage.

La plupart des dispositifs compensateurs connus ne remplissent pas ces conditions.

Ils sont généralement montés en dérivation par rapport au réseau. De ce fait il ne peuvent pas être inondés par les agents chimiques de nettoyage et de stérilisation, ni être stérilisés par l'eau surchauffée circulant dans le réseau selon la procédure couramment utilisée en production dans des conditions aseptiques. Il existe un dispositif à vase d'expansion de ce type pourvu d'un double manteau qui est chauffé par la vapeur lors du processus de stérilisation. Cet agencement nécessite une régulation séparée du circuit de chauffage et le démontage du vase d'expansion en vue de son nettoyage est compliqué.

Les brevets britanniques Nos. 1.474.655 et 1.550.080 illustrent des dispositifs à dilatation raccordés en série au réseau comportant des chambres contenant des organes de dilatation en matériau élastique (vessie dans le premier cas, vessie ou manchon dans le second). La vessie selon le brevet britannique No. 1.474.655 n'est pas accessible aux agents de nettoyage et de stérilisation et le dispositif n'est pas stérilisable. Par contre, le manchon ou la vessie selon le brevet britannique No. 1.550.080 peuvent être, selon le cas, traversés ou entourés par les agents de nettoyage et de stérilisation circulant par le réseau. Cependant, le dispositif reste difficilement stérilisable du fait que des petites quantités résiduelles de produit peuvent, malgré le nettoyage, subsister entre l'organe de dilatation et la chambre au niveau de leur jonction et constituer un danger permanent d'infection.

Le même problème se rencontre également dans le dispositif selon le brevet français d'addition No 67.285 qui est difficilement stérilisable.

Un dispositif à dilatation muni d'une membrane déformable adapté aux exigences du travail dans des conditions aseptiques est décrit dans le brevet suisse No. 510.842. Il est facilement nettoyable et stérilisable sans démontage du fait que sa configuration sans angles morts et l'absence de joints élastiques permettent l'accès des agents à toutes ses parties ayant été en contact avec le produit. Un inconvénient de ce dispositif, de même que des autres dispositifs à dilatation ci-dessus est que l'organe de dilatation, lorsqu'il est exposé aux températures de stérilisation allant jusqu'à 140 °C et aux agents de nettoyage courants, a une durée de vie relativement courte.

Le dispositif selon l'invention tel que décrit dans la revendication 1 ne présente pas les inconvénients des dispositifs connus et satisfait aux exigences du travail dans des conditions aseptiques. Lorsqu'il est placé entre la pompe à pistons à haute pression d'un homogénéisateur et la soupape d'homogénéisation il permet en plus d'améliorer l'homogénéisation.

L'invention sera mieux comprise à la lecture de la description détaillée qui va suivre de différents modes de réalisation du dispositif représentés dans les dessins annexés à titre d'exemples.

La figure 1 est une vue schématique et en coupe longitudinale d'une première forme d'exécution du dispositif et

la figure 2 est une vue schématique et en coupe longitudinale d'une seconde forme d'exécution du dispositif.

Dans ces figures, les mêmes chiffres désignent les mêmes éléments.

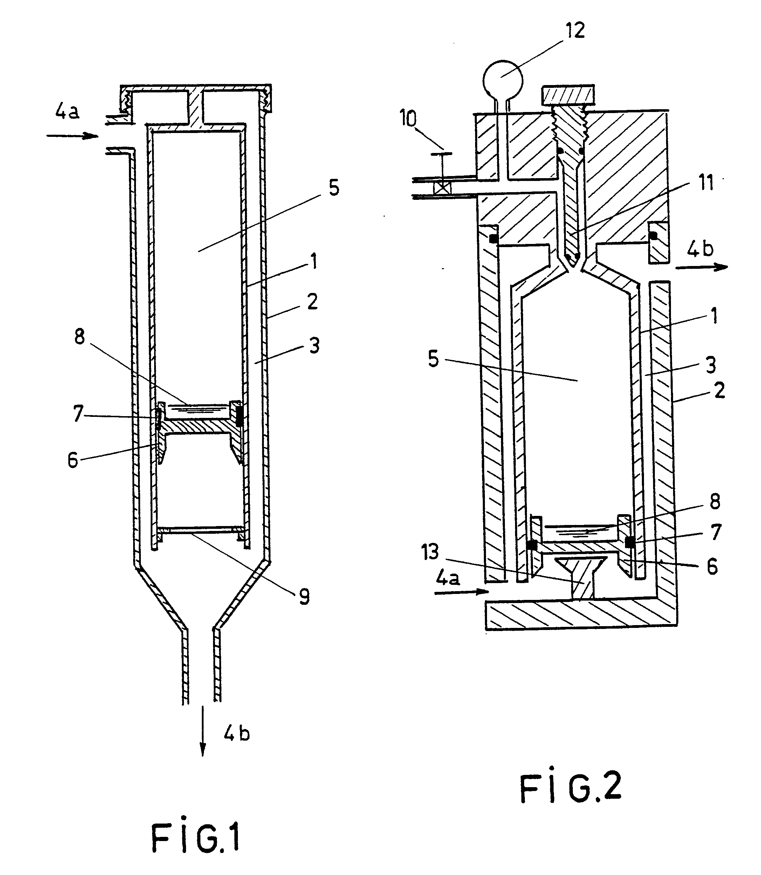

Le dispositif de la figure 1 est destiné à être monté à l'intérieur d'une conduite dans laquelle circule un liquide à débit variable sous une pression ne dépassant pas environ 981 kPa (10 kg/cm²). Il comporte un cylindre amortisseur 1 à parois rigides, fermé à son extrémité supérieure et ouvert à son extrémité inférieure. Le cylindre est rempli d'un gaz, par exemple de l'air ou de l'azote avant qu'on fasse circuler le liquide.

Il est monté coaxialement à la conduite qui constitue la chambre 2 raccordée en série au réseau par la conduite 4a, 4b. De préférence, la section de l'espace annulaire 3 est égale à celle de la conduite 4a, 4b, de sorte que les débits du liquide en amont et en aval du dispositif compensateur correspondent au débit régnant au sein de celui-ci. Le matériau rigide constitutif de l'amortisseur peut être identique à celui des conduites, par exemple en acier inoxydable dans le cas du traitement de produits alimentaires. De préférence, l'amortisseur est monté perpendiculairement à la direction de la conduite d'amenée 4a de manière à faciliter son montage et son démontage, par exemple par vissage sur une extrémité filetée de la chambre 2.

Lorsque l'on fait circuler le liquide à travers le dispositif dans le sens indiqué par les flèches, celui-ci entre dans la chambre 2 par la conduite d'amenée 4a et en sort par la conduite de sortie 4b. Le cylindre se remplit partiellement de liquide puisque son extrémité inférieure est en communication avec la chambre 2. Le niveau du liquide dans le cylindre monte quand sa pression augmente dans le réseau si bien que le gaz contenu dans l'espace 5 se comprime jusqu'à ce que sa pression équilibre celle exercée par le liquide.

Certains produits, comme les liquides qui ne sont pas encore saturés en gaz, par exemple ceux qui ont été préalablement dégazés, sont capables d'absorber du gaz lors des cycles de production de longue durée et de ce fait d'entraîner à la longue le gaz contenu dans le cylindre amortisseur qui ne pourrait alors plus remplir son rôle. Pour l'éviter, le dispositif comporte un piston 6 muni d'un joint étanche 7 monté coulissant à l'intérieur du cylindre 1. Ainsi l'espace 5 occupé par le gaz est séparé du liquide de manière étanche. Le piston comporte sur sa face en regard de l'espace 5 une cavité 8 qu'on a pris soin de remplir d'un milieu aqueux, par exemple d'eau. Le volume d'eau contenu dans la cavité 8 est prévu pour assurer une atmosphère saturante de vapeur d'eau aux températures de stérilisation, de manière à profiter des avantages exposés plus loin. Une butée annulaire 9 assure que le piston ne tombe pas hors du cylindre 1. Le joint étanche 7 ne subit aucune fatigue mécanique pendant les différentes phases de stérilisation, de production et de nettoyage puisque les pressions sont toujours identiques de chaque côté du piston.

Le liquide circulant dans le réseau peut être stérile. Dans ce cas, toute l'installation doit pouvoir être stérilisée de manière parfaite préalablement au passage du liquide. Ceci peut être réalisé, de préférence, en y faisant circuler de l'eau surchauffée, par exemple à une température de 120 à 140 °C pendant 15 à 30 min.. L'eau surchauffée, du fait qu'elle circule tout autour et en partie à l'intérieur du cylindre 1, chauffe également celui-ci ainsi que le gaz qu'il contient dans l'espace 5. Dans ledit espace se constitue une atmosphère de vapeur saturante à la même température que celle de l'eau surchauffée. Cette atmosphère a un pouvoir de stérilisation bien supérieur à celui qu'aurait un gaz sec seul. Par exemple, pour obtenir le même effet de stérilisation pendant la même durée qu'avec la vapeur d'eau à 125 °C, il faudrait que la température du gaz sec, par exemple de l'air, soit 210 °C.

Après la stérilisation à l'eau surchauffée, on refroidit cette même eau en amont du dispositif et l'eau refroidie entoure le cylindre et le refroidit à la température de travail. Dès que celle-ci est atteinte, on peut alors pousser l'eau de stérilisation au moyen du liquide stérile, par exemple du lait et commencer la production dans des conditions aseptiques.

Quand la production est terminée, il faut nettoyer le réseau. On peut le réaliser, par exemple dans l'industrie alimentaire, par rinçage à l'eau, avec une solution d'alcali puis enfin avec une solution d'acide. Dû au régime pulsatoire du débit, le niveau du liquide dans le cylindre amortisseur monte et descend à chaque pulsation, si bien que le liquide résiduel s'échange progressivement contre les solutions de rinçage dans la partie inférieure du cylindre située en dessous du piston 6. Cela signifie que dans la plupart des cas les agents de nettoyage parviennent également à arroser les parois intérieures dans la partie inférieure du cylindre réalisant ainsi un nettoyage impeccable.

La forme d'exécution de la figure 2 est adaptée aux réseaux dans lesquels règnent de fortes pressions, supérieures à 981 kPa (10 kg/cm²), par exemple de l'ordre de 14,7 à 54 MPa (150 à 550 kg/cm²) comme c'est le cas entre la pompe à pistons à haute pression et la soupape d'homogénéisation d'un homogénéisateur. Dans ce cas, on doit prendre garde que le cylindre amortisseur résiste à de telles conditions. De préférence, on choisira ses dimensions aussi faibles que possible aussi bien pour des raisons de résistance mécanique que d'encombrement, les valeurs optimales et l'épaisseur de ses parois pouvant être déterminées en fonction de la pression, du nombre de pistons de la pompe et de la fréquence de leur mouvement.

Pour qu'il puisse remplir son rôle d'amortisseur malgré ses faibles dimensions, il est avantageux de mettre le cylindre sous tension au moyen d'un gaz préalablement à sa mise en service. La pression régnant dans l'espace 5 ainsi que le volume dudit espace pourront être déterminés en fonction de la pression de travail, du volume de produit circulant et de la fréquence des nettoyages par analogie avec les amortisseurs à vessie connus. A titre d'exemple, l'espace 5 occupé par le gaz représentera de 20 à 50 % et de préférence environ 1/3 du volume intérieur du cylindre dans les conditions de fonctionnement habituelles en régime de production.

Avant la mise en service du réseau, on remplit le cylindre 1 d'un gaz provenant d'une source non représentée par ouverture de la vanne 10 et de la soupape 11 jusqu'à ce qu'on atteigne la pression constatée par lecture du manomètre 12. Le piston 6 peut être maintenu au dessus de l'extrémité inférieure du cylindre et protégé de la chute par la butée de retenue 13. Une fois la pression souhaitée atteinte, on ferme les vanne et soupape 10 et 11 et l'amortisseur est prêt à fonctionner. La stérilisation et le fonctionnement ont lieu comme décrit précédemment en liaison avec la forme d'exécution de la figure 1. On voit que comme précédemment le joint de piston 7 ne subit pas de fatigues mécaniques et a une longue durée de vie malgré le travail à haute pression.

Le dispositif selon l'invention peut être utilisé dans le traitement des produits liquides, par exemple les émulsions ou les dispersions dans le domaine alimentaire ou en dehors de celui-ci. Il est particulièrement avantageux pour traiter les produits devant être stérilisés, et le cas échéant homogénéisés après avoir été stérilisés, par exemple les produits cosmétiques, pharmaceutiques et alimentaires et parmi ces derniers en particulier les produits laitiers.

**Revendications**

1. Dispositif compensateur des fluctuations de pression et de débit d'un liquide dans un réseau de circulation dudit liquide, notamment dans un réseau stérilisable comprenant une pompe à pistons, qui comporte une chambre ayant une entrée et une sortie pour le raccordement en série audit réseau et un organe amortisseur hydropneumatique à parois rigides contenant un gaz et ledit liquide, ledit organe amortisseur étant disposé à l'intérieur de ladite chambre de manière qu'il soit entièrement entouré par ledit liquide, le liquide contenu dans l'organe amortisseur étant en communication par une ouverture dans l'organe amortisseur avec le liquide de la chambre et, dans l'organe amortisseur, l'espace occupé par le gaz étant séparé de manière étanche de celui occupé par le liquide par un piston à course sensiblement verticale, caractérisé par le fait que le piston comporte sur sa face supérieure en regard de l'espace occupé par le gaz une cavité ouverte contenant un milieu aqueux.

2. Dispositif selon la revendication 1, caractérisé par le fait qu'il comporte des moyens de mise sous pression du gaz préalablement au passage du liquide.

3. Dispositif selon la revendication 1 ou 2, caractérisé par le fait que la chambre et l'organe amortisseur sont de forme cylindrique et disposés coaxialement.

4. Dispositif selon la revendication 3, caractérisé par le fait que la section du passage annulaire pour le liquide entre l'organe amortisseur et les parois de ladite chambre est égale à la section des orifices d'entrée et de sortie de ladite chambre.

**Claims**

1. A device for compensating variations in the pressure and flow rate of a liquid in a circulation network for said liquid, more especially in a sterilizable network comprising a piston pump which comprises a chamber having an inlet and outlet for connection in series with said network and a hydropneumatic damping element with rigid walls containing a gas and said liquid, said damping element being disposed inside said chamber so that it is completely surrounded by said liquid, the liquid contained in the damping element communicating through an opening in the damping element with the liquid of the chamber and, in the damping element, the space occupied by the gas being separated in fluid-tight manner from that occupied by the liquid by a piston of substantially vertical stroke, characterized in that, it in its upper surface facing the space occupied by the gas, the piston comprises an open cavity containing an aqueous medium.

2. A device as claimed in claim 1, characterized in that it comprises means for placing the gas under pressure before the passage of the liquid.

3. A device as claimed in claim 1 or 2, characterized in that the chamber and the damping element are cylindrical in shape and are coaxially arranged.

4. A device as claimed in claim 3, characterized in that the cross-section of the annular passage for the liquid between the damping element and the walls of said chamber is equal to the cross-section of the inlet and outlet openings of said chamber.

**Patentansprüche**

1. Vorrichtung zum Ausgleichen von Druck- und Durchsatzschwankungen einer Flüssigkeit in einem Zirkulationsnetz dieser Flüssigkeit, insbesondere in einem sterilisierbaren Netz, das eine Kolbenpumpe aufweist, mit einer Kammer, die einen Eingang und einen Ausgang für die Verbindung in Reihe in diesem Netz hat, und einem hydropneumatischen Dämpfungsorgan mit starren Wänden, das ein Gas und die Flüssigkeit enthält, wobei das Dämpfungsorgan im Innern der Kammer derart angeordnet ist, daß es ganz von der Flüssigkeit umschlossen ist, wobei die in dem Dämpfungsorgan enthaltene Flüssigkeit über eine Öffnung in dem Dämpfungsorgan mit der Flüssigkeit der Kammer in Verbindung steht und in dem Dämpfungsorgan der von dem Gas eingenommene Raum dicht von dem, der von der Flüssigkeit eingenommen wird, durch einen Kolben mit einem sensiblen Vertikalhub abgetrennt ist, dadurch gekennzeichnet, daß der Kolben auf seiner oberen Fläche gegenüber dem von dem Gas eingenommenen Raum eine offene Aushöhlung hat, die ein wäßriges Medium enthält.

2. Vorrichtung nach Anspruch 1, dadurch gekennzeichnet, daß sie Mittel aufweist, um das Gas vor dem Durchtritt der Flüssigkeit unter Druck zu setzen.

3. Vorrichtung nach Anspruch 1 oder 2, dadurch gekennzeichnet, daß die Kammer und das Dämpfungsorgan zylindrisch und koaxial angeordnet sind.

4. Vorrichtung nach Anspruch 3, dadurch gekennzeichnet, daß der Querschnitt des ringförmigen Durchgangs für die Flüssigkeit zwischen dem Dämpfungsorgan und den Wänden der Kammer gleich dem Querschnitt der Eingangs- und der Ausgangsöffnung der Kammer ist.

FIG.1

FIG.2